# EUROPEAN PATENT APPLICATION

(11) **EP 1 847 739 A2**
(43) Date of publication of application: **24.10.2007**
(21) Application number: 07251292.4
(22) Date of filing: 27.03.2007
(51) Int. Cl.: F16K 5/06, F16K 5/20

(54) **Improved ball valve and valve seat**

(30) Priority: 10.04.2006 GB 0607199
(71) Applicant: British Engines Limited, Newcastle-Upon-Tyne, Tyne & Wear NE6 1BS (GB)
(72) Inventor: Humphreys, Paul British Engines Limited, Newcastle upon Tyne Tyne & Wear NE6 1BS (GB)
(74) Representative: Gray, James

(57) **Abstract**

A ball valve (10) comprising a housing (12) having an inlet (14) and an outlet (16), and a ball valve element (34) positioned within the housing (12) between the inlet (14) and outlet (16), the ball valve element (34) having a through aperture (68) and being movable between an open position whereby the through aperture (68) is aligned with the inlet (14) and outlet (16) thereby defining a fluid path through the housing (12), and a closed position whereby the through aperture (68) is not aligned with the inlet (14) and outlet (16), wherein the housing (12) is further provided with annular metal seals (74) arranged around the inlet (14) and outlet (16), which seals (74) interact with the ball valve element (34) when in the closed position, each seal (74) comprising a substantially annular base (78) having a forward face, and a flexible annular lip (80) extending from said forward face, and wherein further the ball valve element (34) is provided with opposed sealing projections (72) which contact and deflect the lips (80) of the seals (74) when the ball valve element (34) is in the closed position.

## Description

The present invention relates to an improved valve seat and particularly to a valve seat for a ball valve.

Ball valves are used in a multitude of applications in the oil and gas industry in both subsea and surface environments. A ball valve typically comprises a housing having an inlet and an outlet. Within the housing and between the inlet and outlet there is provided a substantially ball shaped valve element having an aperture therethrough. The valve element is movable between a first position wherein the aperture is aligned with the inlet and outlet and a second position where the aperture is not aligned with the inlet and outlet. In the first position it will be appreciated that a fluid communication path is provided across the housing between the inlet and outlet. In the second position the communication path is closed and hence the inlet of the housing isolated from the outlet. Seal members are provided within the housing which act between the housing and the valve element to ensure that fluid is not able to pass into the interior of the housing when the valve element is in the second position.

Problems exist in the sealing of the valve element in the second or closed position against particularly high pressures. The pressure difference across the valve element can be such that the valve element can be displaced within the housing leading to the deformation of the seals and possibly the housing itself.

According to a first aspect of the present invention there is provided an annular metal seal for a ball valve, the seal, in use, engaging with a sealing surface of valve element of a ball valve, wherein the seal comprising a substantially annular base having a forward face, and a flexible annular lip extending from said forward face.

The seal is of a unitary construction whereby the lip is formed integrally with the base. The lip extends from a portion of the forward face which is substantially midway between the radially inner and outer edges of the forward face. The diameter of the end of the lip distal to the forward face of the annular base has a diameter that greater than the diameter of the inner edge of the annular base. The diameter of the end of the lip distal to the forward face of the annular base has a diameter that is less than the diameter of the outer edge of the annular base. The lip is curved inwardly in the direction of the inner edge of the forward face.

The annular base is further provided with a rear face which is opposite to the forward face. In use, the rear face of the annular base abuts a valve housing in which the seal is fitted. The rear face is preferably provided with an annular seal member. The seal member may advantageously be provided in an annular recess of the rear face. The seal member may preferably have a diameter that is substantially equal to or less than the diameter of the annular lip.

The annular base is preferably also provided with at least one through aperture. In use, the through aperture may receive a fixing therethrough in order to locate and/or secure the seal to a valve housing. The through aperture may further be utilised to facilitate the removal of the seal from the valve housing. In a preferred embodiment, the through aperture is provided in the annular base at a position that is radially outward of the lip. The annular base is preferably provided with a plurality of through apertures which are spaced around the annular base radially outwardly of the lip. In a preferred embodiment the through apertures are equidistantly spaced.

According to a second aspect of the present invention there is provided a ball valve comprising a housing having an inlet and an outlet, and a ball valve element positioned within the housing between the inlet and outlet, the ball valve element having a through aperture and being movable between an open position whereby the through aperture is aligned with the inlet and outlet thereby defining a fluid path through the housing, and a closed position whereby the through aperture is not aligned with the inlet and outlet, wherein the housing is further provided with annular metal seals arranged around the inlet and outlet, which seals interact with the ball valve element when in the closed position, each seal comprising a substantially annular base having a forward face, and a flexible annular lip extending from said forward face, and wherein further the ball valve element is provided with opposed sealing projections which contact and deflect the lips of the seals when the ball valve element is in the closed position.

The seals of the ball valve of the second aspect of the present invention may embody features described with reference to the first aspect.

The sealing projections are aligned along an axis of the ball valve element which is substantially perpendicular to and coplanar with the longitudinal centre line axis of the ball valve element through aperture. The sealing projections are provided with a curved sealing surface which, in use, contacts and deflects the lips of the seals. The sealing projections are preferably rotationally symmetrical about the alignment axis. The sealing projections are preferably part spherical.

An embodiment of the present invention will now be described with reference to the accompanying drawings in which:
Figure 1 shows a cross sectional view of a portion of a ball valve according to an aspect of the present invention having seats according to an aspect of the present invention;
Figure 2 shows a quarter section perspective view of a portion of the ball valve of figure 1; and

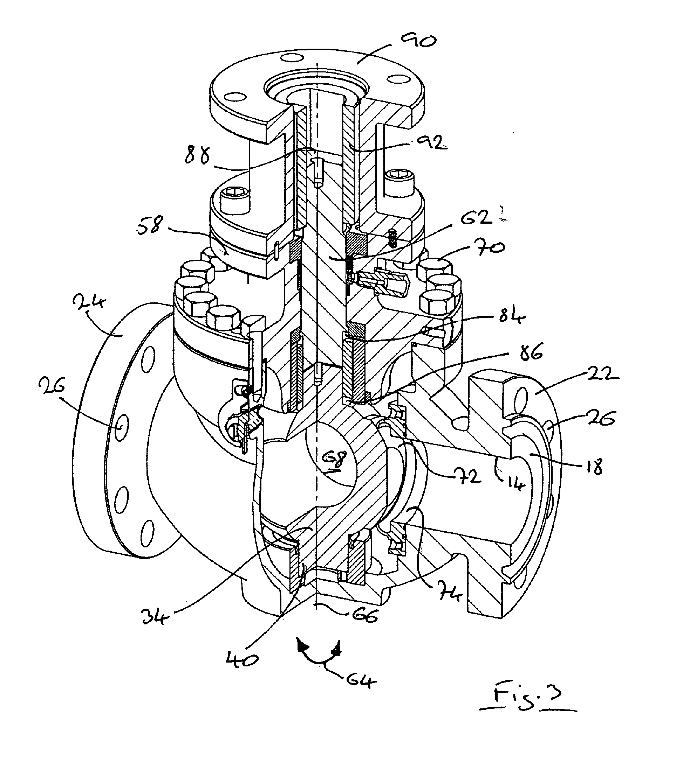

Figure 3 shows a quarter section perspective view of the ball valve of figure 1.

Referring to the figures there is shown a ball valve generally designated 10. The valve comprises a housing 12 having an inlet passage 14 and an outlet passage 16. The outer end of each passage 14, 16 is defined by an aperture 18, 20 in the exterior of the housing 12. Each aperture 18, 20 is surrounded by a flange 22, 24. Each flange 22,24 is provided with a plurality of equidistantly spaced holes 26 which permit a correspondingly flanged and apertured conduit, such as a pipe, to be connected to each flange 22,24. The inner end of each passage 14, 16 is defined by an inner aperture 28, 30. Between the inner apertures 28, 30 there is provided an interior chamber of the housing 12 generally designated 32. Within the chamber 32 there is provided a valve element generally designated 34.

The valve element 34 comprises a part spherical ball portion 36 having opposed bearing portions 38,40 extending therefrom and hereinafter referred to as upper 38 and lower 40 bearing portions. The terms "upper" and "lower" relate to the orientation of the valve 10 as shown in the figures and are used for the purposes of differentiating the bearing portions 38, 40 from one another. The aforementioned terms are not intended to impose any restriction upon the orientation of the valve 10 as a whole, in use. The bearing portions 38, 40 are substantially cylindrical and are received in respective bearings 42, 44 provided with the chamber 32. The lower bearing portion 40 is received in a substantially cup-shaped bearing 44. The bearing 44 is received in seat 46 defined by a recess of the housing 12. The bearing 44 is provided with a through aperture 48 in the base 50 thereof and a seal element 52. The upper bearing portion 38 is received in a substantially cylindrical annular bearing 42. The bearing 42 is received in a seat 56. The seat 56 is provided in an insert member or cap 58 which is fitted to an aperture 60 of the housing 12. The provision of the cap 58 and aperture 60 permit the valve element 34 and other components to be fitted to the chamber 32 during assembly of the valve 10. The cap 58 is connected to the housing by the provision of bolts 70 extending between the cap 58 and the housing 12.

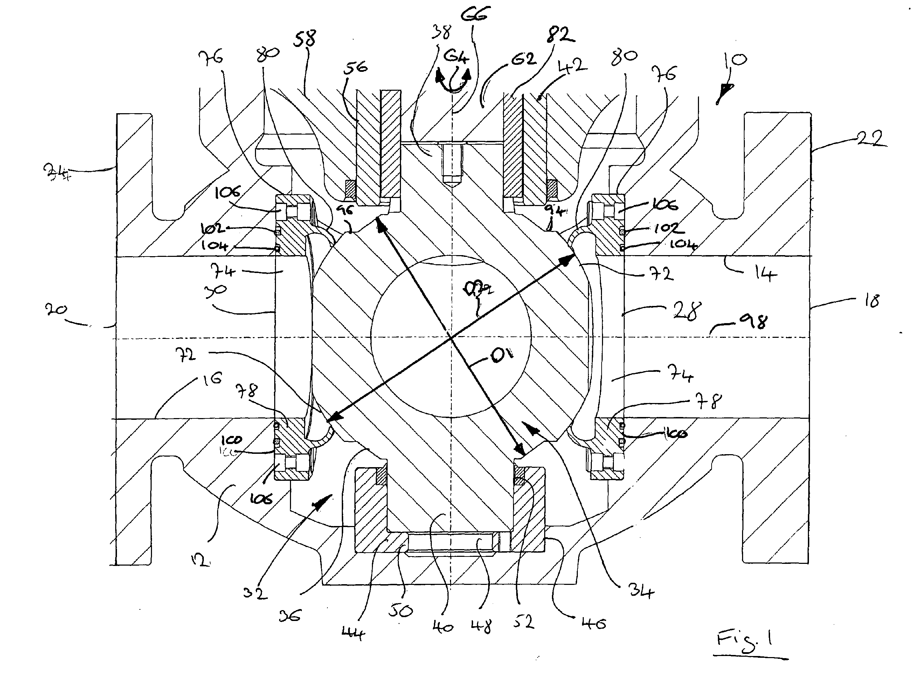

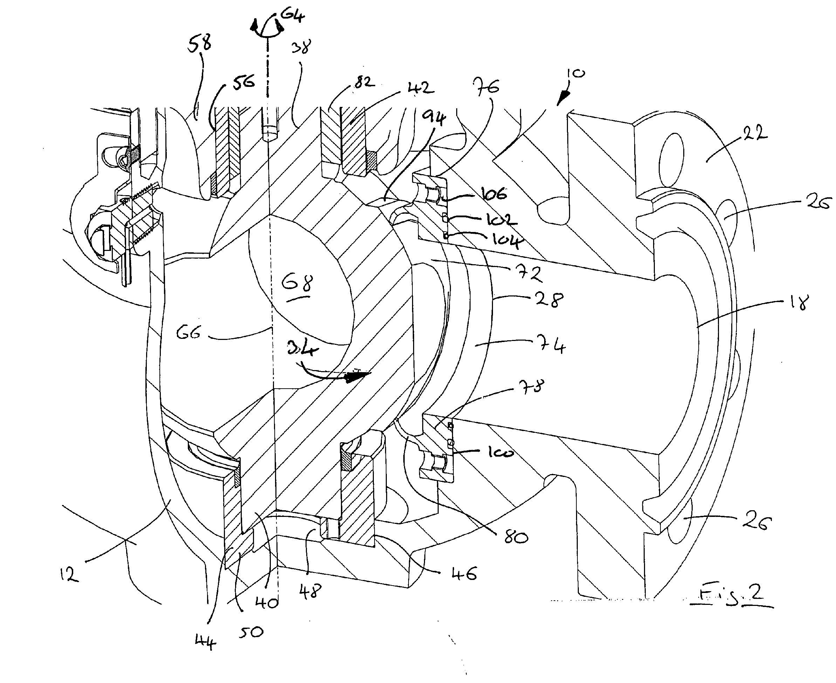

A drive member 62 is connected to the upper bearing portion 38 which permits the valve element 34 to be rotated as indicated by arrow 64 about an axis indicated by broken line 66. The drive member 62 is connected to the upper bearing portion 38 by a key member 82 which interacts with respective slots 84, 86 of the drive member 62 and upper bearing portion 38. The key member 82 rotationally fixes the upper bearing portion 38, and hence the valve element 34, to the drive member 62. The drive member 62 projects from the cap 58 and, in use, may be connected to an appropriate drive means. In the embodiment shown, the outer end 88 of the drive member 62 projects into an annular sleeve 90 connected to the cap 58. The drive member 62 is further provided with a connector 92 to permit the connection of a drive means (not shown) The ball portion 36 of the valve element 34 is provided with a through aperture 68 which is rotatable into and out of alignment with the inlet and outlet passages 14, 16. The valve element 34 is rotatable about the axis 66 aligned with the bearing portions 38, 40. It will be appreciated that the valve 10 may be considered open when the longitudinal axis of the through aperture 68 is aligned with the inlet and outlet passages, and closed when said longitudinal axis is substantially perpendicular to the through aperture 68. In the embodiment shown in figures 1 and 2 the valve element 34 is in the closed position. In order to move between the open and closed positions, the valve element 34 is required to rotate through substantially ninety degrees.

The ball portion 36 is further provided with opposed sealing projections 94, 96, each of which is provided with a curved sealing surface 72. The sealing projections 94, 96 are provided on opposite sides of the ball portion 36 along an axis 98 passing through ball portion that is substantially perpendicular to, but coplanar with, the longitudinal centreline axis of the through aperture 68. The sealing surface 72 of each sealing projection 94, 96 is part spherical and rotationally symmetrical about the axis 98. The effect of the sealing surfaces 72 is to increase the effective diameter of the ball portion 36 when compared to the diameter of the ball portion 36 not having the projections 94, 96. The differences in diameter can be seen in figure 1 wherein arrow D1 indicated the diameter of the ball portion 36 not having the sealing projections 94, 96, and arrow D2 indicates the increased diameter of the sealing surfaces 72 of the sealing projections 94, 96.

So as to provide adequate sealing of the valve element 34 when it is in the closed position, the curved sealing surfaces 72 interact with annular seals 74 of the housing 12. The seals 74 surround the inner apertures 28, 30 of the housing passages 14, 16 and are received in respective recessed seats 76 of the housing. Each seal 74 comprises a base in the form of a ring 78 and a forwardly protruding curved lip 80. The lip 80 of each seal 74 is flexible and is deflected by the curved sealing surfaces 72 of the valve element 34 when the valve element 34 is in the closed position. The deflection of the lip 80 in this manner ensures that a fluid tight seal is made between the valve element 34 and the seals 74. The seals 74 may be manufactured from a high strength Nickel alloy.

The spacing of the seals 74 is such that the portions of the ball portion 36 having diameter D 1 are spaced from and hence do not deflect the lips 80 of the seals 74, while the increased diameter D2 of the sealing surfaces 72 ensures that they contact and deflect the lips 80 when the valve element is in the closed position. The portions of the ball portion 36 surrounding each end of the through aperture 68 have diameter D1. Thus, when the valve element 34 is in the open position, a space exists between the seals 74 and the valve element 34.

The rear face 100 of the base ring 78 of each seal 74 is provided with a pair of annular ring seals 102,104 which prevent the flow of fluid between the base ring 78 and the housing when the valve element 34 is in the closed position. The base ring 78 is further provided with a plurality of through apertures 106. The through apertures 106 are spaced about the base ring 78 radially outwardly of the lip 80. Fasteners (not shown) may extend through the apertures 106 to secure the seal 74 to the housing 12. One or more of the apertures 106 may receive a projection of the housing 12 to locate the seal to the housing.

In instances where the pressure differential across the valve element 34 in the closed position is sufficient to displace the valve element 34 within the housing 12, the flexible nature of the lips 80 continue to ensure that a fluid tight seal is made between the valve element 34 and seals 74. It will be appreciated that the valve element 34 will be displaced towards the lower pressure side of the housing 12. The lip 80 present on the seal 74 of the lower pressure side of the housing 12 will thus be deflected to a greater extent than the lip 80 of the seal 74 on the upper pressure side. The lip 80 of the seal 74 on the upper pressure side will however remain sufficiently deflected to maintain an adequate seal with the sealing surface 72 of the valve element 34.

## Claims

1. An annular metal seal for a ball valve, the seal, in use, engaging with a sealing surface of valve element of a ball valve, wherein the seal comprising a substantially annular base having a forward face, and a flexible annular lip extending from said forward face.

2. A seal as claimed in claim 1, wherein the lip extends from a portion of the forward face which is substantially midway between the radially inner and outer edges of the forward face.

3. A seal as claimed in claim 1 or claim 2, wherein the diameter of the end of the annular lip distal to the forward face of the annular base is greater than the diameter of the inner edge of the annular base.

4. A seal as claimed in any preceding claim, wherein the diameter of the end of the annular lip distal to the forward face of the annular base is less than the diameter of the outer edge of the annular base.

5. A seal as claimed in any preceding claim, wherein the lip is curved inwardly in the direction of the inner edge of the forward face of the annular base.

6. A seal as claimed in any preceding claim, wherein the annular base further includes a rear face which is opposite to the forward face and which rear face is provided with an annular seal member.

7. A seal as claimed in claim 6, wherein the annular seal member is provided in an annular recess of the rear face.

8. A seal as claimed in claim 6 or claim 7, wherein the annular seal member has a diameter that is substantially equal to or less than the diameter of the annular lip.

9. A seal as claimed in any preceding claim, wherein the annular base is provided with at least one through aperture.

10. A seal as claimed in claim 9, wherein the through aperture is provided in the annular base at a position that is radially outward of the lip.

11. A seal as claimed in claim 9 or claim 10, wherein the annular base is provided with a plurality of through apertures which are spaced around the annular base radially outwardly of the lip.

12. A ball valve comprising a housing having an inlet and an outlet, and a ball valve element positioned within the housing between the inlet and outlet, the ball valve element having a through aperture and being movable between an open position whereby the through aperture is aligned with the inlet and outlet thereby defining a fluid path through the housing, and a closed position whereby the through aperture is not aligned with the inlet and outlet, wherein the housing is further provided with an annular metal seal arranged around each of the inlet and the outlet, which seals interact with the ball valve element when in the closed position, each seal comprising a substantially annular base having a forward face, and a flexible annular lip extending from said forward face, and wherein further the ball valve element is provided with opposed sealing projections which contact and deflect the lips of the seals when the ball valve element is in the closed position.

13. A ball valve as claimed in claim 12, wherein the sealing projections are aligned along an axis of the ball valve element which is substantially perpendicular to and coplanar with the longitudinal centre line axis of the ball valve element through aperture.

14. A ball valve as claimed in claim 12 or claim 13, wherein the sealing projections are provided with a curved sealing surface which, in use, contacts and deflects the lips of the seals.

15. A ball valve as claimed in claim 12, 13 or 14, wherein the sealing projections are rotationally symmetrical about the alignment axis.

16. A ball valve as claimed in any of claims 12 to 15, wherein the sealing projections are part spherical.

17. A ball valve as claimed in any of claims 12 to 16, wherein the lip of each annular metal seal extends from a portion of the forward face which is substantially midway between the radially inner and outer edges of the forward face.

18. A ball valve as claimed in any of claims 12 to 17, wherein the diameter of the end of the annular lip of each annular seal distal to the forward face of the annular base is greater than the diameter of the inner edge of the annular base.

19. A ball valve as claimed in any of claims 12 to 18, wherein the diameter of the end of the annular lip of each annular seal distal to the forward face of the annular base is less than the diameter of the outer edge of the annular base.

20. A ball valve as claimed in any of claims 12 to 19, wherein the lip of each annular seal is curved inwardly in the direction of the inner edge of the forward face.

21. A ball valve as claimed in any of claims 12 to 20, wherein the annular base of each annular seal includes further a rear face which is opposite to the forward face, and which rear face is provided with an annular seal member.

22. A ball valve as claimed in any of claims 12 to 21, wherein the seal member of each annular seal is provided in an annular recess of the rear face of the annular seal.

23. A ball valve as claimed in claim 22, wherein the seal member of each annular seal has a diameter that is substantially equal to or less than the diameter of the annular lip.

24. A ball valve as claimed in any of claims 12 to 23, wherein the annular base of each annular seal is provided with at least one through aperture configured to receive a fixing therethrough in order to locate and/or secure the annular seal to a valve housing.

25. A ball valve as claimed in claim 24, wherein the through aperture of the annular seal is provided in the annular base at a position that is radially outward of the lip.

26. A ball valve as claimed in claim 24 or claim 25, wherein the annular base of each annular seal is provided with a plurality of through apertures which are spaced around the annular base radially outwardly of the lip.
